(19) Europäisches Patentamt
European Patent Office
Office européen des brevets

(11) Publication number: **0 226 541**
**A2**

(12) **EUROPEAN PATENT APPLICATION**

(21) Application number: 86810569.3

(22) Date of filing: 05.12.86

(51) Int. Cl.[4]: C 09 B 23/02
G 03 C 1/84

(30) Priority: 11.12.85 GB 8530458

(43) Date of publication of application:
24.06.87 Bulletin 87/26

(84) Designated Contracting States:
BE CH DE FR GB IT LI

(71) Applicant: CIBA-GEIGY AG
Klybeckstrasse 141
CH-4002 Basel(CH)

(72) Inventor: Webb, Terence Charles, Dr.
5, Racebourse Road
Wilmslow Cheshire SK9 5LF(GB)

(72) Inventor: Edwards, Douglas James
21 Colwich Crescent
Kingston Hill Stafford ST16 3XP(GB)

(72) inventor: Grossel, Martin Christopher
44, Villiers Close
Surbiton Surrey KT5 SDN(GB)

(54) **Anti-halation dyes.**

(57) Anti-halation dyes, wherein the repeating group is of the general formula

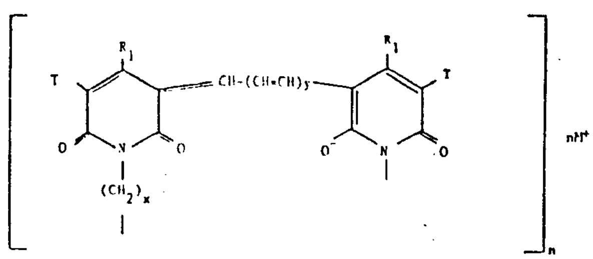

wherein $R_1$ is alkyl, T is $-CN$ or $-CO_2R_1$, x is 3 to 6, y is 0,1 or 2, n is 1 to 4 and $M^+$ is a cation.

*Fig.1.*

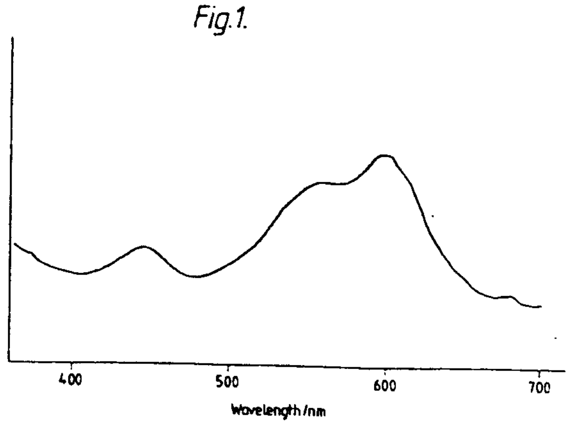


EP 0 226 541 A2

0226541

8-15667/=/ILF 1393

## Anti-halation dyes

This invention relates to novel anti-halation dyes.

Anti-halation dyes which comprise at least one hydroxypyridone nucleus are described in British patent Specification No. 1278621
and have found great use as anti-halation dyes in photographic materials. Dyes of this type exhibit a broad spectral absorption and they are readily bleachable. They are compatible with photographic silver halide emulsions and do not interact in any unfavourable way with photographic materials. Dyes of this type can also be used in anti-halation underlayers but in this case it is required to mordant the dye to the layer as they are not layer substantive.

We have found derivatives of the dyes described in B.P. No 1278621 which retain all the advantageous features of the dyes described therein but which are also layer substantive in a photographic layered assembly.

According to the present invention there are provided oligomeric hydroxypyridone dyes wherein the repeating group is of the general formula I:

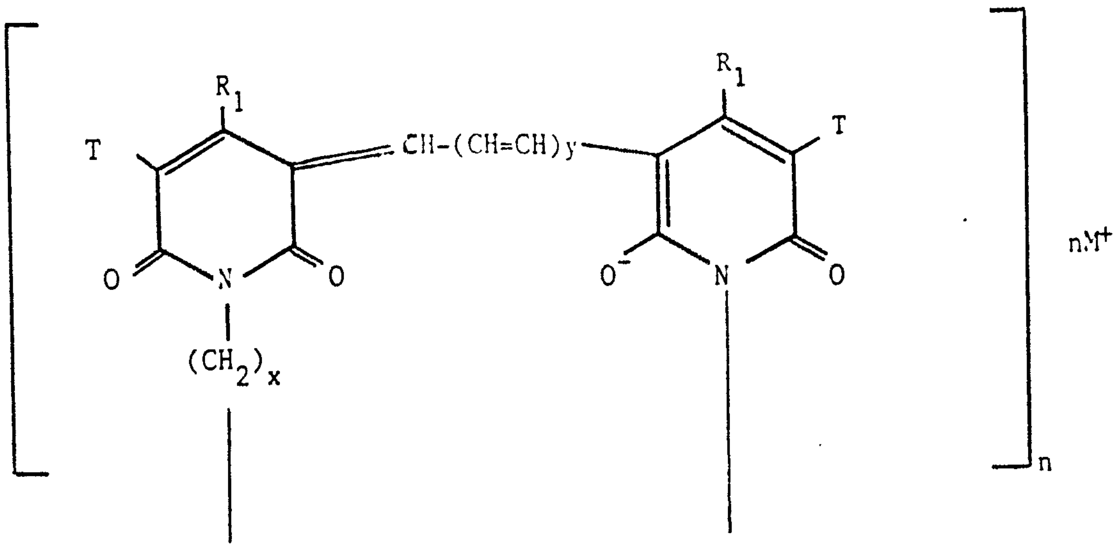

where $R_1$ is an alkyl group having 1 to 4 carbon atoms,

T is a -CN or $-COOR_2$ group where $R_2$ is an alkyl group having 1 to 4 carbon atoms,

x is 3 to 6,

y is 0, 1 or 2,

n is 1 to 4,

and $M^+$ is a cation.

Preferably T is CN and $R_1$ is methyl or ethyl.

According to another feature of the present invention the oligomeric compounds of formula I are prepared from compounds of formula II

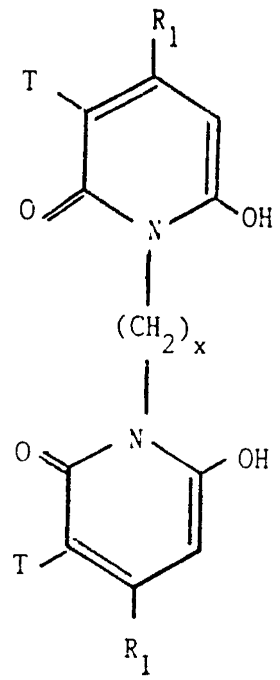

where R, T and x are as defined above by reaction with a methine bridge coupling agent in an organic solvent in the presence of an acid or a base.

Compounds of formula II have two equivalent sites available for condensation with the coupling agents.

Compounds of formula II are novel compounds and their production is set forth hereinafter.

Many suitable coupling agents are described in No. 1278621. These include acetals of the formula III:

$(VO)_2\ CH\ (CH{=}CH)_y\ OV$

where y is 0,1 or 2 and V is a lower alkyl radical of 1 to 6 carbon atoms which can be the same or different.

Examples of acetals which can be used include B-ethoxy acrolein diethyl acetal, B-ethoxy acrolein dimethyl acetal and triethyl orthoformate.

Preferably one molar part of the acetal is condensed with one molar part of the bis-pyridone of formula II in an organic solvent in presence of a base or an acid (where M is H).

When y is 2 oligomeric compounds of formula I can be prepared using an aldehyde methine bridge coupling agent of the formula IV:

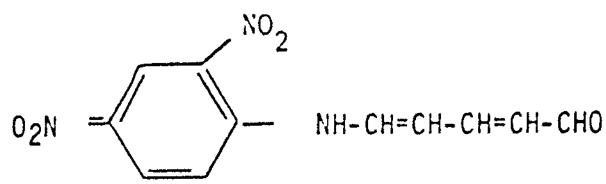

Another class of methine bridge coupling agent which can be used is a dianil of the formula V:

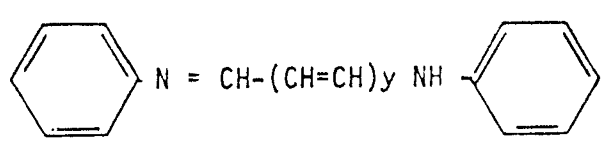

where y is defined above.

Preferaby when using either the aldehyde coupling agent or the dianil coupling agent one molar part of the bispyridone of formula II is condensed with one molar parts of the coupling agent in an organic solvent in the presence of a base or acid such as triethylamine or acetic acid at an elevated temperature.

The oligomers formed by reacting the bis-pyridone compounds of formula II with a methine bridge coupling agent are thought to have the general formula VI:

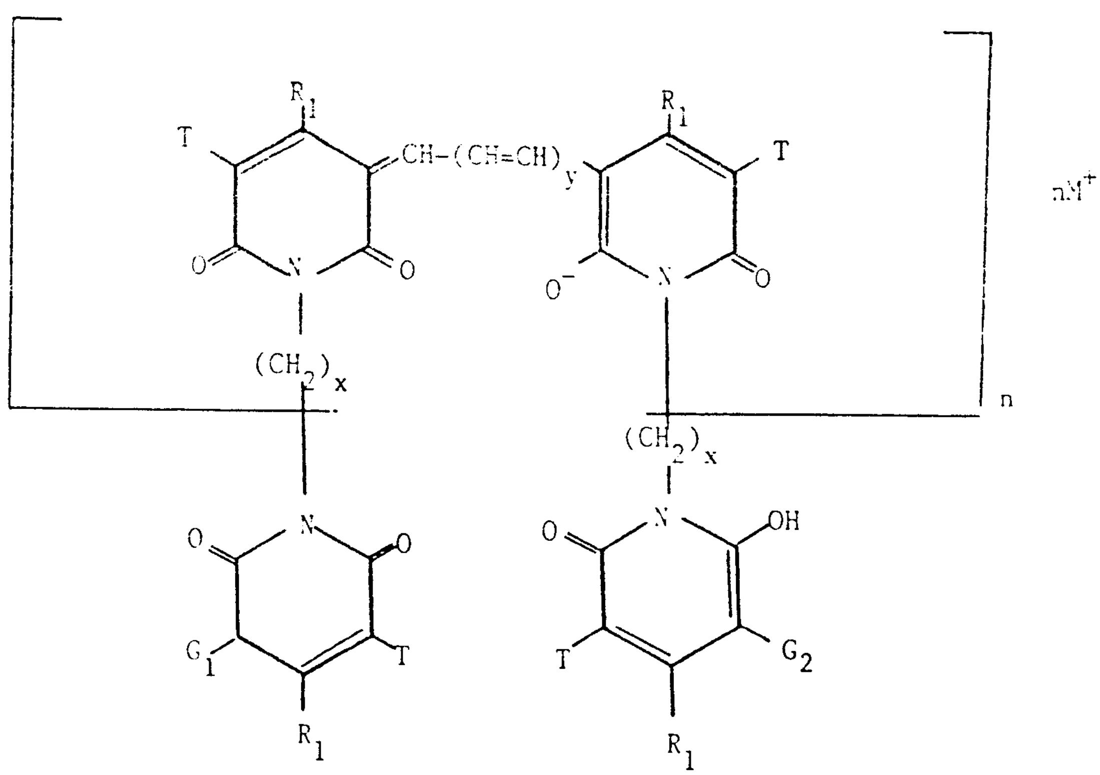

where T, R, M, x and y have the meanings assigned to them above and one of G1 and G2 is a hydrogen atom and the other is the residue of the methine bridge coupling agent used in the preparation of the oligomer.

The value of y depends on the methine bridge coupling agent used.

The condensation reaction usually takes several hours and the value of n is determined during this period by removing aliquots from the reaction mixture and analysing the condensate formed. Usually 'n' reaches a maximum before decomposition starts to occur and 'n' decreases.

The bispyridone of formula II may be obtained by reacting 2 parts of a compound of formula VII:

$$T - CH_2 CO_2 R_2$$

where T is as defined above and $R_2$ is hydrogen or alkyl with 1 part of a diamine of the formula VIII:

$$H_2 N-(CH_2)_x NH_2$$

where x is as defined above to yield a compound of the formula IX

$$T CH_2 CO NH (CH_2)_x NHCOCH_2T$$

Double ring closure to produce a bispyridone of formula II is then obtained by reacting one part of a compound of formula VIII with 2 parts of a compound of formula X:

$R_1$ CO $CH_2$ $CO_2$ $R_3$

where $R_1$ is as defined above and $R_3$ is an alkyl group having 1 to 4 carbon atoms.

The following preparations will serve to illustrate the preparation of three novel bis-pyridones of formula II.

Preparation I

Preparation of N,N-trimethylene-bis-(3-cyano-6-hydroxy-4-methyl pyrid-2-one) of the formula XI

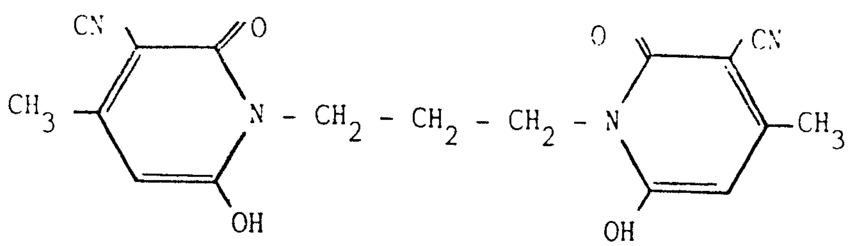

Part 1 Preparation of N, N' dicyanoacetyl-1,3- diaminopropane.

A mixture of 30.5g (0.27 mol) ethyl cyanoacetate and 10.0g (0.135 mol) 1,3 -diaminopropane in 20ml of ethanol was refluxed with stirring for 4 hrs. The reaction mixture was allowed to cool and the solid residue was filtered off and dried over $P_2O_5$. The yellow solid weighed 7.5g (27%) m.p. = 158-159°C.

Part 2 Preparation of the bis-pyridone of formula X

To a solution of 1.1g (0.048 mol) sodium in 50ml methanol was added 5.0g (0.024 mol) N,N'-dicyanoacetyl-1,3 diamino propane (as just prepared) and 6.2g (0.048 mol) ethyl acetoacetate; the reaction mixture was then refluxed for 18 hrs. After cooling any solid deposited

was filtered off. To the filtrate was added 80ml water which was then acidified with 5.0ml concentrated hydrochloric acid. The resulting precipitate was filtered off and dried over $P_2O_5$. The pale yellow solid weighed 5.5g (67%) (m.p. = 251-253°C (decomp).

Preparation 2

Preparation of N,N-tetramethylene-bis(3-cyano-6-hydroxy-4-methyl pyrid-2-one) of the formula XII:-

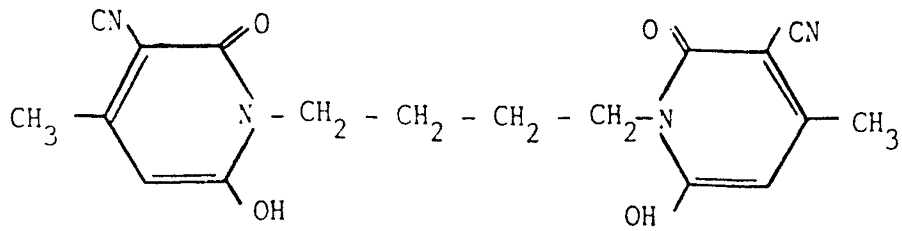

Part 1 Preparation of N, N'-dicynoacetyl-1,4-diaminobutane.

A mixture of 20.0g (0.23 mol) 1,4 diaminobutane and 51.3g (0.46 mol) ethylcyanoacetate in 50ml of ethanol was refluxed for 4 hrs; to yield 42.7g (85%) of a yellow solid m.p. = 147.0-148.0°C.

Part 2. Preparation of the bis-pyridone of formula XI.

To a solution of 2.1g (0.09 mol) sodium in 100cm$^3$ methanol was added 10.0g (0.045 mol) N, N' -dicyanoacetyl-1,4-diaminobutane (as just prepared) and 11.7g (0.09 mol) ethyl acetoacetate. The mixture was refluxed for 18 hrs to yield 9.6g (60%) of the yellow product after acidification, M.p. = 272.0-275.0°C(decomp).

Preparation 3

Preparation of N,N'-hexamethylene-bis(3-cyano-6-hydroxy-4-methyl pyrid-2-one) of the formula XII:

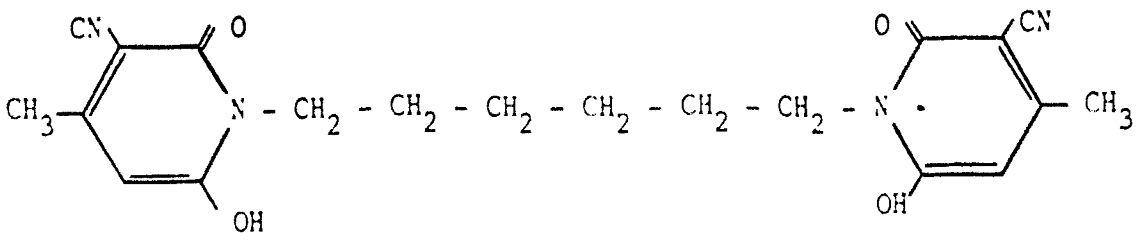

Part 1. Preparation of N, N' dicyanoacetyl-1,6-diaminohexane.

A mixture of 58.0g (0.5 mol)-1,6-diaminohexane and 113.0g (1.0 mol) ethyl cyanoacetate in 100ml ethanol was refluxed for 4 hrs to yield 98.7g (79%) of a buff precipitate M.p. 149.0-151.0°C.

Part 2. Preparation of the bis-pyridone of formula XII.

125.0g (0.05 mol) N,N' - dicyanoacetyl - 1,6 - diaminohexane and 130.0g (1.0 mol) ethyl acetoacetate were added to a solution of 23.0g (1.0 mol) sodium in 500 $cm^3$ methanol and the mixture refluxed for 18 hrs. On cooling and after acidification 138.2g (72%) of a yellow product was obtained, M.p. = 236.0-238.0°C (decomp).

The dyes of formula I are of use as anti-halation dyestuffs in photographic material. The dyes are water soluble but when adsorbed into a gelatin or other binder layer aggregate and become substantive to that layer. They absorb over a wide spectral range of the visible spectrum as shown in the accompanying figure 1. Further the compounds are easily bleached in sulphite solutions and in developing solutions which comprise sulphite. They are photographically inert.

Therefore according to another aspect of the present invention there is provided photographic material which comprises an anti-halation layer which comprises at least one dye of formula I.

The anti-halation layer may be a backing layer or an anti-halation underlayer, that is to say between the photosensitive layer or layers and the support base. In both cases it is important that the dye in the coated product does not migrate out of the layer in which it was coated.

The following example will serve to illustrate the invention.

Example

Preparation of oligomeric N, N'-hexamethylene-bis-pyridone oxonol of the formula XIV.

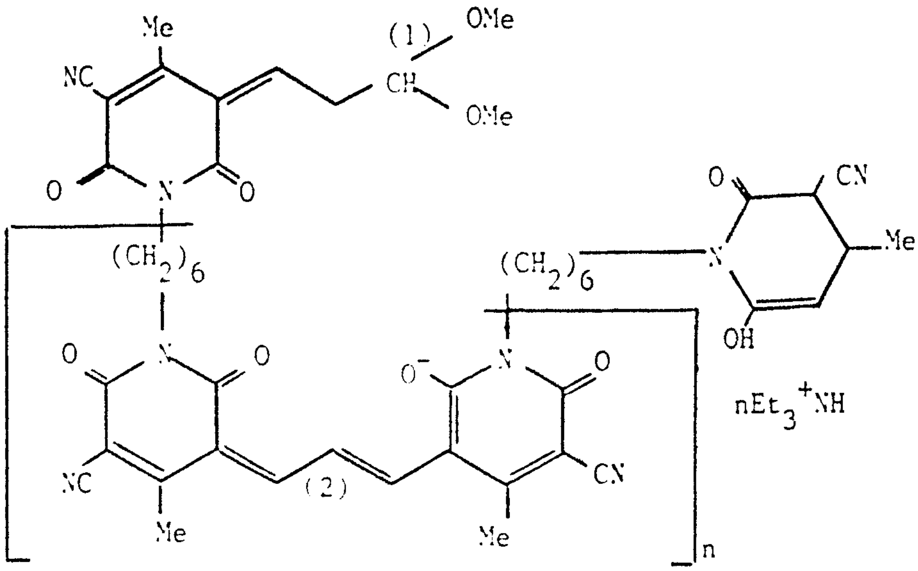

N,N'-hexamethylene-bis-hydroxypyridone (20.0g, 0.052 mol) as prepared in Preparation 3 was dissolved in dimethylformamide (50.0 $cm^3$) in a 250 $cm^3$ two-necked, round-bottomed flask to give an approximately 40% solution. 1,1,3,3-tetramethoxypropane (8.6g 0.052 mol) and triethylamine (3.4g, 0.034 mol) were then added and the mixture was refluxed in an oil bath at 130°C for 48 hours. 5 Ml aliquots were taken every 4 hours using a 5 ml pippete, in order to follow the course of the reaction. These 5 ml aliquots were diluted down to 10 ml with dimethylformamide and were then added dropwise to 750 ml of ethyl acetate in a 1 litre beaker which was being magnetically stirred vigorously. The dark blue product which precipitated out was filtered off and dried in an oven at approximately 80°C.

End-group analyses of the aliquots were then carried out. These analyses were carried out by deriving from the high field 'H n.m.r. spectra two peaks, one corresponding to one or more equivalent protons of the end group labelled (1) in figure XIV, and the other to one or more equivalent protons of the repeating unit labelled (2) in figure XIV. The ratio of their relative integrals provided an estimate of the number of repeating units (n) at the time the aliquot sample was taken.

| Time/hrs | 4 | 8 | 12 | 16 | 21 | 25 | 29 | 45 |
|---|---|---|---|---|---|---|---|---|
| n | 2.30 | 2.89 | 3.54 | 4.08 | 3.46 | 3.00 | 2.39 | 1.58 |

In the accompanying figure 2 there is shown how each of the absorption bands varied with time. The figure shows:

(a) 0-16 hrs (i) a gradual decrease in absorbances at 592, 554 and 441nm coupled with a decrease at 312 and 257nm.

and (ii) a steady shift to a higher molecular weight distribution.

(b) 16-48 hrs; (i) a gradual increase in absorbances at 257 and 312 nm coupled with a decrease at 592, 554 and 441 nm.

and (ii) a steady shift to a lower molecular weight distribution.

The absorbances at 592, 554 and 441nm are essentially due to the lower molecular weight, water soluble, species, monomeric and dimeric material in the main. The absorbances at 257 and 312nm correspond to the bis-hydroxypyridone. The results show that between 0-16 hours there is a consumption of the bis-hydroxypyridone and the formation of higher molecular weight, water insoluble, material. Between 16-48 there is an increase in residual bis-hydroxypyridone resulting possibly from the gradual decomposition of oligomeric material.

It was found that the most suitable material for use as an antihalation dye systems was the oligomeric material formed after 4 hours. That is to say material which had an average n of 2.3.

When n was much greater than this the material was no longer water soluble and thus difficult to formulate in an anti-halation layer.

Use of the oligomeric compound formed after 4 hours. Figure 1 shows the U/V absorption spectrum obtained from a 1 mg solution of the compound in 100cc of water. This figure shows the wide absorption of the dye over the whole range of the visible spectrum.

Gelatin coatings containing the compound formed after 4 hours were prepared. 80mg of the compound was dissolved in 10ml water. 0.5ml of this solution was added to 3.0 ml of a 10%

gelatin solution containing 1 ml of 1% saponin. This was then made up to 10ml with water and coated on to a transparent strip of cellulose triacetate film base and dried.

The coated strips were examined under a strong light and a completely uniform black colour was observed in the strip. This shows that the dye is compatible with gelatin and can be easily coated in a gelatin layer.

Layer substantivity. A UV/visible spectrum of one of the strips wasplotted. Then the strip was immersed in a water bath for 30 minutes at 20°C. The strip was then dried and the UV/visible spectrum was again plotted. There was very little change in the two plots indicating that the level of substantivity of the compound was very high. The substantivity level was calculated to be 88.7%.

Bleachability. The UV/visible spectrum of another of the strips was plotted. The strip was then immersed in a 0.5M sodium sulphite solution at 20°C for 2 minutes. The strip was then dried and the UV/visible spectrum of the strip again plotted. The strip was in fact completely free of dye and thus there was no light absorption at all indicating that the dye had been completely bleached.

The UV/visible spectrum of another strip was plotted. The strip was then immersed for 2 minutes at 20°C in a working

strength solution of a silver halide developing agent of the following composition:

| | |
|---|---|
| Metol | 2.0g |
| Hydroquinone | 5.0g |
| Sodium sulphite | 100g |
| Borax | 3g |
| Water | to 1000ml |

The UV/visible spectrum of the strip was then plotted after the strip had been dried. This showed that 97.8% bleaching of the dye had occurred.

A fine grained silver halide emulsion was coated on a coated gelatin strip containing the dye formed after four hours and the coating, after drying, was exposed to a resolution test object and processed. The resultant silver image showed much superior resolution when compared with a similar coating which lacked the dyed underlayer. Comparison was also made with a photographic material in which the same emulsion was coated on to film base which carried an anti-halo backing containing a carbon black dispersion on the reverse side: the two emulsions had similar sensitivities to light showing that little or no dye had migrated from the underlayer into the emulsion: if appreciable quantity of dye had migrated it would have competed with the silver halide for the incident light and led to loss of photographic sensitivity.

Claims:

1. Oligomeric hydroxypyridone dyes wherein the repeating group is of the general formula I:

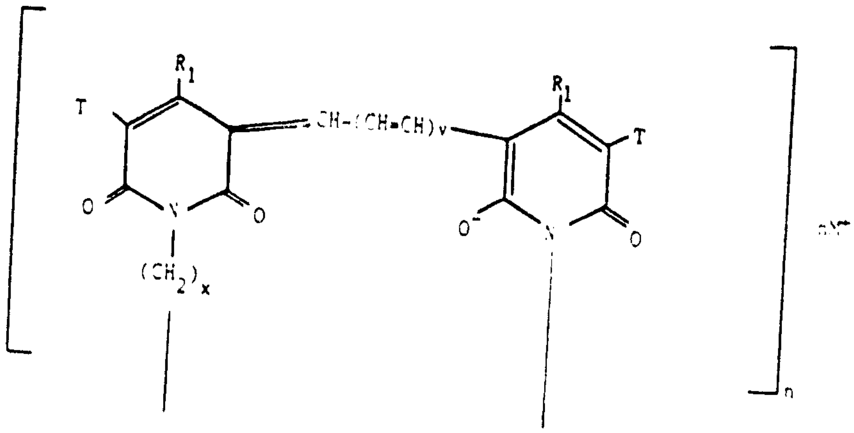

where $R_1$ is an alkyl group having 1 to 4 carbon atoms,

T is a -CN or $-COOR_2$ group where $R_2$ is an alkyl group having 1 to 4 carbon atoms,

$x$ is 3 to 6,

$v$ is 0, 1 or 2,

$n$ is 1 to 4,

and $M^+$ is a cation.

2. Oligomeric dyes according to claim 1 wherein T is CN.

3. Oligomeric dyes according to claim 1 wherein $R_1$ is either methyl or ethyl.

4. A process for the preparation of the oligomeric dyes as claimed in claim 1 which comprises reacting a bispyridone compound of formula II:

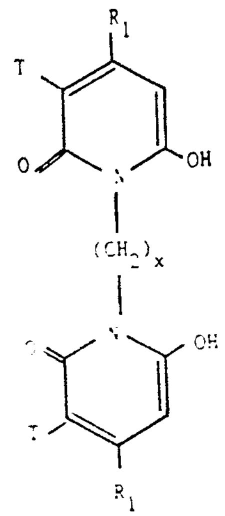

where $R_1$, T and x are as defined in claim 1 with a methine bridge coupling agent in an organic solvent in the presence of an acid or a base.

5. A process according to claim 4 wherein the methine bridge coupling agent is an acetal of the formula:

where y is 0, 1 or 2 and V is a lower alkyl radical of 1 to 6 carbon atoms which can be the same or different.

6. A process according to claim 4 where y in formula I in claim 1 is 2 wherein the methine bridge coupling agent is an aldehyde of the formula:

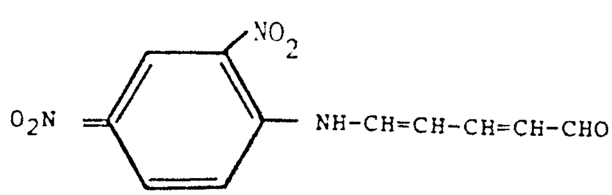

7. A process according to claim 4 wherein the methine bridge coupling agent is a dianil of the formula:

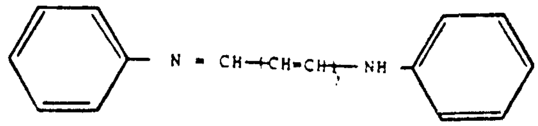

where y is 0, 1 or 2.

8. An oligomeric hydroxypyridone dye when prepared by the process of claim 4.

9. Photographic material which comprises an anti-halation layer which comprises at least one dye as claimed in claim 1.

FO 7.1/KH/hpw*

Fig.1.

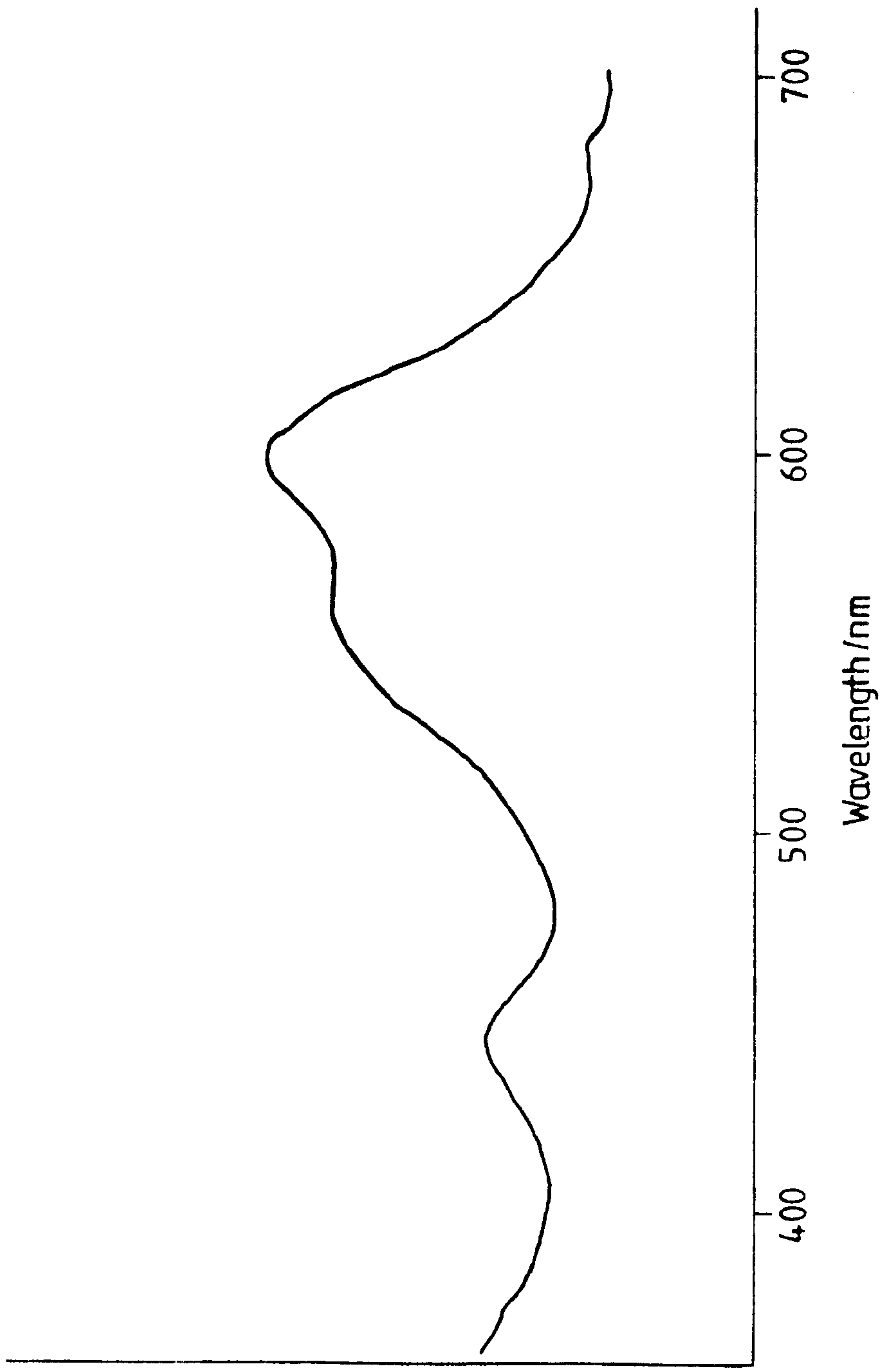

Fig.2.

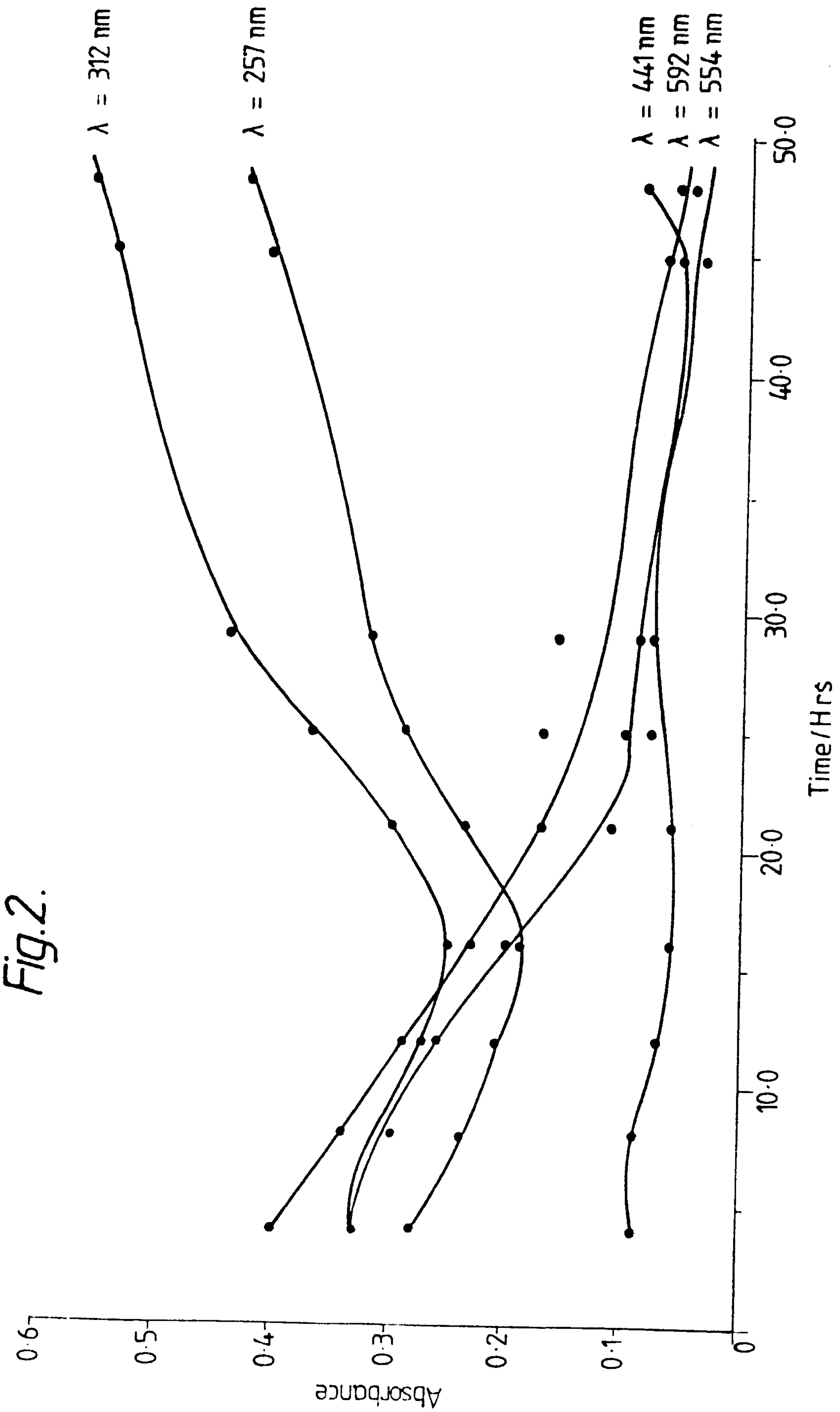
λ = 312 nm
λ = 257 nm
λ = 441 nm
λ = 592 nm
λ = 554 nm
Absorbance
0
0·1
0·2
0·3
0·4
0·5
0·6
Time/Hrs
10·0
20·0
30·0
40·0
50·0